# EUROPEAN PATENT SPECIFICATION

(11) **EP 1 536 352 B1**
(45) Date of publication and mention of the grant of the patent: **08.01.2014**
(21) Application number: 03026994.8
(22) Date of filing: 26.11.2003
(51) Int. Cl.: H04L 29/08, H04L 29/06, G06Q 30/02

(54) **System for accessing content items over a network**
System für den Zugriff auf Inhaltselemente über ein Netzwerk
Système d'accès à des elements de contenu à travers un réseau

(43) Date of publication of application: 01.06.2005
(73) Proprietor: Sony Corporation, Tokyo 108-0075 (JP)
(72) Inventor: Riegler, Andreas, c/o Sony NetServices GmbH, 5081 Anif (AT); Petro, Oliver, c/o Sony NetServices GmbH, 5081 Anif (AT)
(74) Representative: Müller - Hoffmann & Partner

(56) References cited:
- WO-A-02/057971
- ISAACS S: "Inside Technique: Tell a Friend" INSIDE TECHNIQUE, 2000, XP002230308 Retrieved from the Internet: <URL:www.siteexperts.com/tips/backend/ts17 /page1.asp> [retrieved on 2003-02-06]
- "Collaborative Filtering, Recommender Systems, and Recommendation Software: Some Thoughts" RECOMMENDER PROJECT, [Online] XP002284231 Retrieved from the Internet: <URL:http://web.archive.org/web/2003022507 1308/http://www.thevenue.org/collaborative _filtering.html> [retrieved on 2004-06-14]

## Description

The present invention relates to a system to enable a consumer to access at least one content item, which is provided by one or more content providers, via a network.

Such content items, also referred to as entertainment items or generally referred to as content, might include audio content and/or text content and/or audio/video content, which is provided by one or more content providers, to at least one consumer via a network.

Networks have become ubiquitous these days. Telephone networks, computer networks, cellular networks are part of life. These networks, once separate entities, commingle to form means for the transport of data to any connected device.

The networks enable people access to data, data that informs and entertains. Once information and entertainment items that suit the information needs, the entertainment wants and the personal tastes are found by a consumer, access of the content is performed and the consumer has to pay the content provider for the supplied content.

The applicant developed a Personal Media System (PMA), which is an entertainment product offering
■ music service, e.g.: personalized channel, pre-defined channel, pre-defined playlist, Consumer defined playlist, music selection feature, and related content like ringtones),
■ news service, and/or
■ community service
in audio, audiovisual and text form.

The PMA service is offered to end-consumers over any data network, e.g.:
■ mobile telephone network,
■ broadband internet, and/or
■ digital interactive TV

The PMA service is available on any capable device, e.g.:
■ mobile phone,
■ personal computer,
■ home entertainment product, e.g.: TV set, HiFi stereo, game console..., and/or
■ mobile entertainment product, e.g. network walkman, ....

The service offered is either of
■ a streaming service, i.e. the consumer does not own the content, and
■ a download service, i.e. the consumer owns or licenses the content.

Therefore, a sophisticated structure to supply content to consumers is given. A charging for such services is made via credit cards, specially arranged accounts or via other contracts. In general, a group of users that subscribed in some way to a certain content provision service might be regarded as a community to which in principle the same service is available.

However, in general no or only limited special community services, i.e. services that allow the interaction of community members, are offered.

WO 02/057971 relates to an arrangement for facilitating the sharing of a content item. Moreover, XP 002230308 ("Inside Technique: Tell a Friend", by Scott Isaacs) discloses a "Tell a friend" function. US 2003/0066067 discloses a method of modifying a first user's user profile for a data-class recommender.

Therefore, it is the object underlying the present invention to enhance a community service in respect to content, which is provided by one or more content providers to a community of subscribers to this content service, i.e. to at least one consumer, via a network.

The above objects are solved by the claimed matter according to the independent claims.

Therefore, the content provision service method to enable a consumer to access at least one content item, which is provided by at least one content provider, via a network, according to the present invention comprises the steps of:
- providing at least one content item to a user via said network,
- enabling the user to recommend at least one of the at least one content item and/or a group of content items relating thereto to the consumer via said network, and
- enabling the consumer to select said recommended at least one content item and/or group of content items relating thereto and to retrieve the selected content item(s) via said network from the at least one content provider.

Therewith, the present invention provides the possibility for sending a content item, e.g. a song, and/or a group of content items, e.g. a playlist and/or a channel, to a friend who is also a member of the community, i.e. a user who e.g. actually uses the content service recommends e.g. a currently accessed content item to another community member, i.e. the (possible) consumer of the recommended content item. Therewith, the proposed community service establishes a function that allows community members to exchange their musical taste with other community members, e.g. a friend/buddy. Of course, not only individual songs, playlists, i.e. a certain number of songs, and channels, i.e. an endless sequence of e.g. songs described by a certain selection profile, might be exchanged, but also all other kinds of comparable content items or groups of content items, e.g. news, texts, visual content, etc.

Preferably, in this method according to the present invention the user gets enabled to recommend said content item(s) by
- assigning a respective identifier to each content item and/or group of content items supplied to the user,
- transmitting each identifier to said user, and
- enabling the user to forward at least one identifier of said transmitted identifiers to the consumer.

Such an identifier according to the present invention enables an unambiguous identification of single content items and also of groups of content items, e.g. a certain number of content items or also an endless sequence of content items fulfilling certain criteria. On basis of the assigned identifier the single content item or group of content items can be retrieved.

Further preferably, in this method according to the present invention the user gets enabled to forward at least one of said at least one transmitted characteristic information item to the consumer by a messaging service.

Such a messaging service allows the automation of the recommendation procedure and therewith in particular the possibility to easily communicate a recommendation. An example could be that a user currently listens to a song which he or she wants to recommend to a friend. In this case the messaging service might be initiated by depressing of a particular button on the used content access device, e.g. a mobile phone, and then be executed with the display of at least a part of the corresponding characteristic information item, e.g. the song title and the artist, and the request to enter the name, number, address, ... of the friend, i.e. the consumer, and then to depress a send button to the user. Alternatively or additionally further preferably, in this method according to the present invention the consumer gets enabled to select said recommended content item(s) and to retrieve the selected content item(s) via the network by the steps of:
- enabling the consumer to select a received identifier,
- enabling the consumer to communicate the selected identifier to said at least one content provider, and
- transmitting the content item(s) corresponding to said identifier to the consumer.

As indicated above, a content service provider might be used by the content provider to manage the distribution of the content. In respect to the present invention the content provider and the content service provider are comparable, i.e. have equal functions, namely to enable the selection and retrieval of content. The content service provider might aggregate the content of several content providers. Also, the content service provider might offer a more sophisticated service than the content provider, since the focus lies more in the service around the content and not in the content as such, which is the focus of the content provider.

In case a content service provider is arranged between content provider and user/consumer, the identifier might get assigned and managed by the content service provider. Then, also an identifier that gets selected by the consumer gets communicated to the content service provider who might perform an access and content provider check and then transmits the content item(s) corresponding to said identifier to the consumer.

The identifier according to the present invention comprises and/or points to
- a characteristic information item of a single content item or a single content item, or
- a group of characteristic information items of single content items or a group of single content items, or
- a user profile of the user to provide a characteristic information item for a channel of content items.

Such a characteristic information item might include the title, length, genre, artist, actuality, ... of a corresponding content item, i.e. information to generally identify the content item and/or parameters that describe how the recommending user obtained the content item, e.g. a user profile of the recommending user. Further, the characteristic information item might also include information of the community within which said corresponding content item is available and/or information from which content provider and/or service provider said corresponding content item is available. With such information a content provider or service provider, which manages the contents of several content providers, might determine whether or not a content item requested by a consumer based on its corresponding characteristic information item can and might be supplied to this particular consumer. In other words, it can be determined whether or not the content provider or service provider that is addressed by the consumer can offer this content item at all, and further it can be determined whether or not the consumer subscribed to the community that is allowed to retrieve the particular content item.

The above possibilities for the identification cover the recommendation of single content items or groups thereof as well as a whole user profile which allows the customer to adapt thereto and to e.g. receive the same personalized content items as the recommending user.

The identifier according to the present invention enables a short transmission of a link to a characteristic information item in respect to the particular content item(s) or directly to the content item(s), since the characteristic information item(s) might be rather complex, in particular in case of a the user profile.

Therefore, in the method according to the present invention, preferably a user profile of the user gets copied to that of the consumer in case the characteristic information item corresponding to said communicated identifier is a user profile of the user.

As indicated above, this allows the community of users not only to share single content items, but also refined user profiles that reflect a particular, maybe very special personal taste. This sharing of single content items, groups of content items, or even user profiles might serve as an important factor in selling the content items to the community of users, i.e. to achieve acceptance of the content provision concept at the user side. The copying might be performed directly at the time of recommendation or alternatively at the time the consumer communicates said identifier to the content service provider or content provider.

Alternatively, as a more soft method, the user profile of the consumer might get adapted according to the characteristic information item, in particular in case the characteristic information item corresponding to said communicated identifier is for one content item or a group of content items, but also in case said characteristic information item is a user profile.

The method according to the present invention preferably comprises the step of:
- providing a content recommendation client or device to the user, and
- providing a content access client or device to the consumer.

With the provision of such clients or devices, an easy and uncomplicated manner of communication of the users and consumers with a content delivering server as described above is secured. In contrast to specially adapted devices, clients according to the present invention are preferably software implementations of the consumer content access method and/or the user content recommendation method as defined in the following that get implemented into existing communication devices.

Correspondingly, the content provision service device, comprising:
- a content access interface to enable a user and a consumer to respectively select and retrieve at least one content item, which is provided by at least one content provider, via a network,
according to the present invention additionally comprises
- a user recommendation unit to enable a user to recommend at least one of the at least one content item and/or a group of content items relating thereto to the consumer via said network, and
- a consumer recommendation retrieval unit to enable the consumer to retrieve at least one content item and/or group of content items relating thereto recommended by the user and selected by the consumer via said network from the at least one content provider.

In the content provision service device according to the present invention preferably said user recommendation unit comprises
- an assignment unit to assign a respective identifier to each content item and/or group of content items supplied to the user, and
- an identifier transmission unit to transmit each identifier to said user.

In said preferred embodiment of the content provision service device according to the present invention preferably said consumer recommendation retrieval unit comprises
- an identifier reception unit to receive a selected identifier from a consumer, and
- an identifier interpreter retrieving a content item and/or group of content items corresponding to said identifier and supplying said content item(s) as selection, which is to be transmitted to the consumer, to said content access interface.

Further, in said content provision service device according to said preferred embodiment alternatively or additionally the identifier comprises and/or points to
- a characteristic information item of a single content item or a single content item, or
- a group of characteristic information items of single content items or a group of single content items, or
- a user profile of the user to provide a characteristic information item for a channel of content items.

In this case, the content provision service device according to the present invention preferably further comprises
- a user profile copying unit to generate a user profile of the consumer by copying a stored user profile of the user.

A consumer content access device to enable a consumer to access at least one content item, which is provided by at least one content provider, via a network, comprising
- a communication unit enabling the consumer to retrieve one or more selected content item(s) via the network from the at least one content provider,
according to the present invention comprises
- a recommended content item retrieval unit enabling the consumer to retrieve one or more content item(s) from said at least one content provider, which content item(s) are indicated as a recommendation of at least one content item and/or a group of content items relating thereto from a user who already retrieved at least one content item of said content item recommendation via said network to said consumer.

In the consumer content access device according to the present invention preferably said recommended content item retrieval unit comprises
- an identifier reception unit to receive one or more identifiers as an indication for a recommendation of at least one content item and/or a group of content items relating thereto,
- an identifier selection unit enabling the consumer to select an identifier of at least one received identifier, and
- an identifier communication unit enabling the consumer to communicate said selected identifier as an indication for selected content item(s) to said content provider via said network.

In the consumer content access device according to the present invention further preferably the identifier selection unit comprises
- a presentation unit to display at least a part of each received identifier to the consumer, and
- an extraction unit to extract a selected identifier.

Correspondingly, a consumer content access method to enable a consumer to access at least one content item, which is provided by at least one content provider, via a network, comprising the step:
- enabling the consumer to retrieve one or more selected content item(s) via the network from the at least one content provider,
according to the present invention comprises the step of:
- enabling the consumer to retrieve one or more content item(s) from said at least one content provider, which content item(s) are indicated as a recommendation of at least one content item and/or a group of content items relating thereto from a user who already retrieved at least one content item of said content item recommendation via said network to said consumer.

The consumer content access method according to the present invention further preferably comprises the steps of:
- enabling the consumer to receive one or more identifiers as an indication for a recommendation of at least one content item and/or a group of content items relating thereto,
- enabling the consumer to select an identifier of at least one received identifier, and
- enabling the consumer to communicate said selected identifier as an indication for selected content item(s) to said content provider via said network.

The consumer content access method according to the present invention still further preferably comprises the step of enabling the consumer to select an identifier comprises the steps of:
- displaying at least a part of each received identifier to the consumer, and
- enabling the consumer to extract a selected identifier.

A user content recommendation device, comprising
- a content reception unit to receive at least one content item and/or a group of content items relating thereto from at least one content provider via a network,
according to the present invention comprises
- a recommendation unit to enable the user to recommend at least one content item and/or a group of content items relating thereto of the at least one received content item and/or a group of content items relating thereto to at least one consumer.

In the user content recommendation device according to the present invention preferably the recommendation unit comprises
- a identifier reception unit to receive a respective identifier in respect to a single of the at least one received content item and/or a respective identifier in respect to a group of single received content items and/or a respective identifier in respect to a user profile of the user, which respective identifiers are respectively received additionally to the at least one received content item, and
- a capturing unit to capture at least one of said received identifiers, and
- a forwarding unit to forward said at least one captured identifier to at least one consumer.

Correspondingly, a user content recommendation method, comprising the step of:
- receiving at least one content item and/or a group of content items relating thereto from the at least one content provider via a network, and
according to the present invention comprises the step of:
- enabling the user to recommend at least one content item and/or a group of content items relating thereto of the at least one received content item and/or a group of content items relating thereto to at least one consumer.

The user content recommendation method according to the present invention preferably further comprises the step of enabling the user to recommend at least one content item and/or a group of content items relating thereto to the at least one consumer comprises the steps of
- communicating a respective identifier in respect to a single of the at least one received content item and/or a respective identifier in respect to a group of single received content items and/or a respective identifier in respect to a user profile of the user,
- enabling the user to capture at least one of said received identifiers, and
- enabling the user to forward said at least one captured identifier to at least one consumer.

The computer program product according to the present invention comprises computer program means adapted to perform the respective method steps as set-out above when being executed on a computer, digital signal processor or the like.

The computer readable storage means according to the present invention stores thereon a computer program product according to the present invention.

The respective user content recommendation method and/or consumer content access method according to the present invention is preferably implemented on a
■ mobile phone, smartphone, pda, ... as user and/or consumer device, and further preferably as a (respective) client that gets executed on the respective user/consumer device, and
■ Technique (Client, Server)

It is further to be noted that the user content recommendation device as set-out above preferably comprises the features of the consumer content access device as set-out above and vice versa, i.e. that any member of the community can share his/her retrieved content with any other member of the community.

As indicated above, the method in particular enables sharing of
■ individual songs,
■ playlist (number of n songs), and
■ channels (endless sequence of songs described by a song selection profile).

The present invention in particular uses and defines the concept that content recommended by a user is retrieved from the consumer from the content provider (either directly or via a content service provider). Further, the recommended content items are identified by way of unambiguous identifiers that can be easily communicated and might point to more complex characterizing information items used to retrieve the content items or directly to the content items. For a better understanding of the invention and to further elucidate the invention, its features, objects and advantages, an exemplary preferred embodiment thereof is described in detail by way of example while making reference to the accompanying drawing, wherein:
- **Fig. 1**: shows an example of sender and receiver during the recommendation of a channel from a user to a friend, i.e. consumer,
- **Fig. 2**: shows a content service provider, user, consumer scenario, and
- **Fig. 3**: shows a recommendation of a channel.

As indicated above, content does refer to any information and entertainment item in one media format or the combination of multiple media formats. Media Formats may be audio, video, images, pictures and text. One piece of content, e.g. one song, one news article, one movie, etc., is generally referred to as a content item.

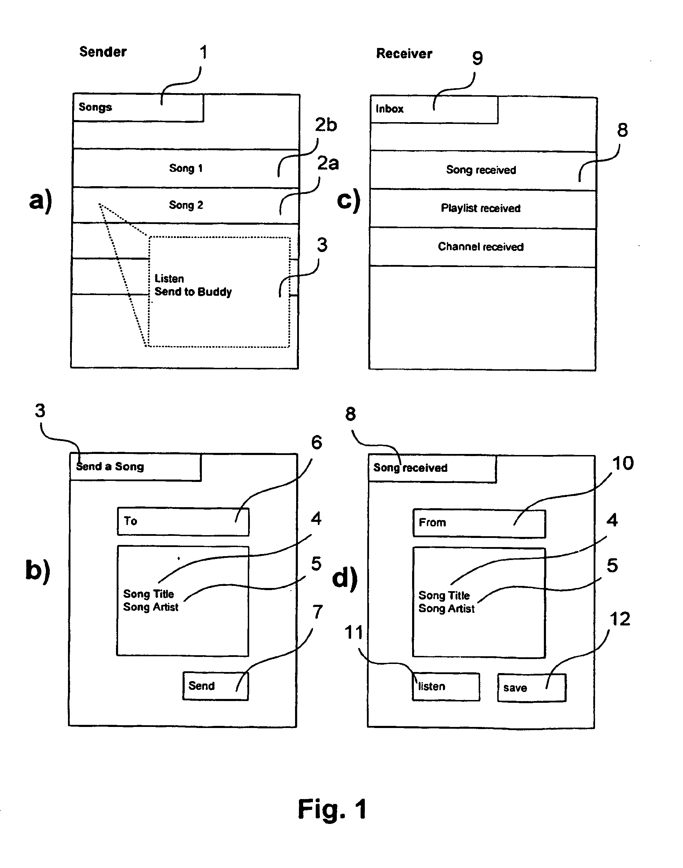

The example shown in figure 1 depicts a situation in which
■ a user of the service who is listening to a channel or playlist and likes its sound would like to recommend the channel, the playlist or one of the songs thereof, e.g. the current song, to a friend,
■ a function according to a preferred embodiment of the present invention is available to send the channel, the playlist or the song to a friend, i.e. the (possible) consumer, and
■ the friend receives a message that another user has recommended him a channel, a playlist or a song, wherein the friend, i.e. the consumer, has the option to either listen to the channel, the playlist or the song, or to save the channel, the playlist or the song to be able to access it later.

In particular, figure 1a) shows the display of the channel or playlist 1 with a number of songs 2a, 2b on the sender side, i.e. the side that recommends content to the possible consumer, i.e. the receiver side. The user of the sender device wants to recommend an e.g. currently output song 2a to a friend. Therefore, he/she depresses a dedicated button on the content output device (or alternatively navigates through a menu) to recommend this song 2a to the friend, i.e. the user activates a 'send to buddy' mode 3 for this song.

In this send to buddy or send a song mode 3, which is shown in figure 1b) a new display is generated by the content output device of the user, which shows the song title 4 and the song artist 5 of the selected song 2a, an input field 6 to input the destination of the recommendation, e.g. the telephone number of the friend to whom the song should be recommended, and a send button 7.

After insertion of the destination of the recommendation, e.g. via a telephone book function, and upon depression of the send button 7, the receiver indicates a new received song recommendation 8 in its inbox 9, as shown in figure 1c).

Upon selection of the newly received song recommendation 8 by the friend, i.e. the customer, a new display is generated by the content output device of the customer, which shows the song title 4 and the song artist 5 of the recommended selected song 2a, an output field 10 indicating the origin of the recommendation, e.g. the telephone number of the user from whom the song was recommended, a listen button 11, and a save button 12, as shown in figure 1d).

This song received display enables the consumer to access at least one content item, here the received selected song 2a, which is provided by one or more content providers, via a network. Instead of a single song the user could alternatively or additionally recommend the current playlist and/or channel. A playlist can be a recommended as a list of single songs, since it comprises a predetermined number of content items. A channel can be recommended based on a channel reference so that the consumer receives whatever is next.

However, the recommendation of a playlist and/or a channel might also be realized differently to the recommendation of a single song. This different recommendation is based on a communication of the parameters used to generate the playlist or set-up the channel. Of course, also a reference to these parameters might be communicated. In an individualized content retrieval system, these parameters might be the user profile of the recommending user, which is then used by the consumer to retrieve at least parts of the recommended content. In other words, the consumer adapts to a 'recommended user profile'. A further adaptation of this recommended user profile by the consumer might also be possible, i.e. the consumer might use the recommended user profile only as an initial user profile and then has the possibility to further refine the recommended user profile according to his/her wishes.

The customer can decide whether to immediately listen to the recommendation by depressing the listen button 11, or to save the recommendation by depressing the save button 12 and to later retrieve the recommendation.

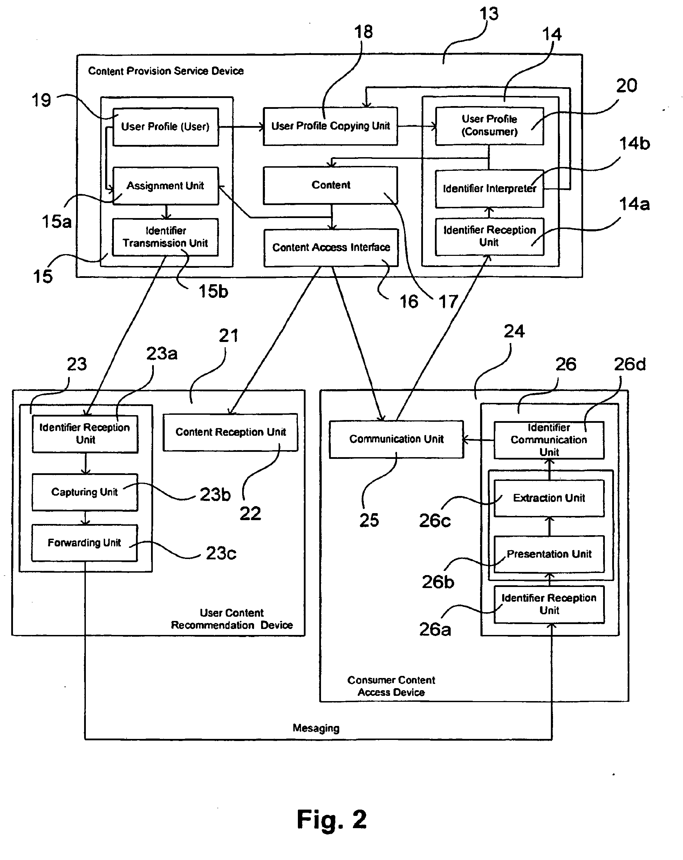

Figure 2 shows a content provision service device 13 according to a preferred exemplary embodiment of the present invention, e.g. a server of a content service provider. Besides the shown units necessary for the invention, also other units might be included in the content provision service device 13. The content provision service device 13 comprises a content access interface 16, a content database 17, which might also be an access possibility to a content database provided by a content provider, a user recommendation unit 15, a consumer recommendation retrieval unit 14, and a user profile copying unit 18.

The content access interface 16 serves users, i.e. general users of the system that consume content items and also recommend content items, and consumers, i.e. general users of the system that receive a content item recommendation and consume the recommended content items, to access the content items available in the content database 17.

The user recommendation unit 15 generally enables a user to recommend content items. It comprises a user profile 19 of the user (or an access to said user profile), an assignment unit 15a and an identifier transmission unit 15b. The assignment unit 15a assigns a respective identifier to each single content item accessed by the user, to each group of n content items accessed by the user, and to each endless group of content items, i.e. channel, the user accesses. Therefore, the assignment unit 15a is connected to the content database 15 and receives an indication of the accessed content item(s) to define identifiers for accessed single content items and groups of n content items and to the user profile 19 of the user to define an identifier for a channel of content items accessed by the user on basis of his/her user profile. The assigned identifiers are communicated to the identifier transmission unit 15b that transmits the assigned identifiers to the user device corresponding to the accessed content items.

The user device, in the following referred to as user content recommendation device 21 (due to this main functionality according to the invention), comprises a content reception unit 22 and a recommendation unit 23. The content reception unit is connected to the content access interface 16 of the content provision service device 13 and receives selected content for provision to the user. The recommendation unit 23 comprises an identifier reception unit 23a that receives identifiers corresponding to the received content. When the user wants to recommend a single content item, a group of n content items, or a channel of content items, a capturing unit 23b captures the corresponding identifier and passes it to a forwarding unit 23c that forwards the captured identifier to a consumer who should receive the recommendation from the user.

The consumer device, in the following referred to as consumer content access device 24 (due to this main functionality according to the invention), comprises a recommended content item retrieval unit 26 and a communication unit 25. The communication unit 25 enables the consumer content access device 24 to retrieve selected content from the content access interface 16 of the content provision service device 13, as will be described in the following. The recommended content item retrieval unit 26 comprises an identifier reception unit 26a to receive identifiers forwarded from the or another user. The identifier reception unit 26a passes all received identifiers to a presentation unit 26b for display that enables extraction of selected identifiers by an extraction unit 26c, both last units are included in an identifier selection unit that is also included in the recommended content item retrieval unit 26. The extracted identifiers are communicated by an identifier communication unit 26d (that is also included in the recommended content item retrieval unit 26) to an identifier reception unit 14a of the content provision service device 13 via the communication unit 25.

The identifier reception unit 14a is included in the consumer recommendation retrieval unit 14 of the content provision service device 13. Identifiers received by the identifier reception unit 14a are forwarded to an identifier interpreter 14b of the consumer recommendation retrieval unit 14 that is connected to the content database 17 and a user profile copying unit 18. In case the identifier interpreter 14b receives an identifier for a single content item or a group of n content items, the content items will be identified to the content database 17 and transmitted to the communication unit 25 of the consumer content access device 24 via the content access interface 16 of the content provision service device 13. In case the identifier interpreter 14b receives an identifier for a channel of content items, an indication is given to the user profile copying unit 18 to copy the user profile 19 of the user to the user profile 20 of the consumer. This new user profile of the consumer is then used to retrieve a content item channel from the content database 17 that gets transmitted to the communication unit 25 of the consumer content access device 24 via the content access interface 16 of the content provision service device 13.

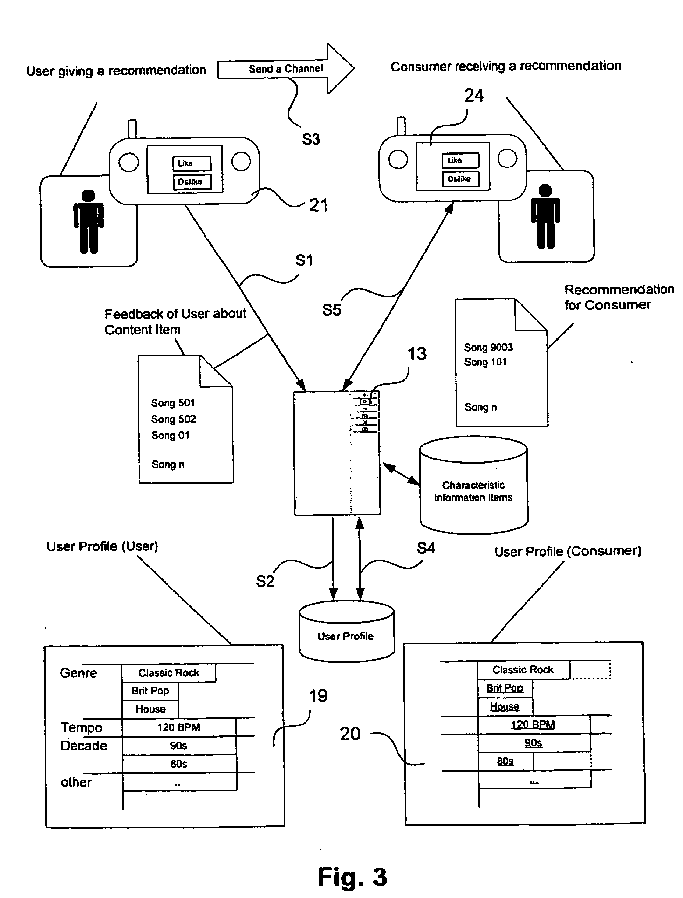

Figure 3 shows the principle of such a content item channel recommendation. In a first step S1 the user giving the recommendation is building his/her user profile 19 by providing feedback to content items via the user content recommendation device 21. This user profile 19 is stored and updated, i.e. managed, by the content provision service device 13 in a following second step S2. The user profile 19 comprises metadata or a characteristic information item for the particular user to define his/her taste, e.g. a certain genre, e.g. a certain percentage classic rock, brit pop and house, a certain tempo, e.g. 120 beats per minute, a certain decade, e.g. a certain percentage 90s and a certain percentage 80s, and other features.

After the user recommends his/her channel that is set-up according to his/her user profile 19 in a following third step S3, the user profile 19 of the user gets copied for the consumer to serve as (initial) consumer user profile 20 in a following fourth step S4. Then, in a following fifth step S5 a content item channel is set-up for the consumer based on his/her new user profile 20 and the content items of this channel are communicated to the consumer content access device 24. The consumer can then refine his/her user profile 20 by giving a feedback.

Since a content item channel might generally depend also on other criteria besides the user profile, the content items, e.g. songs, within both of the above described channels, i.e. that of the user and that of the consumer, might be different.

As indicated above, the present invention in particular uses and defines the concept that content recommended by a user is retrieved from the consumer from the content provider (either directly or via a content service provider), i.e. the content items are not directly communicated from the user to the consumer. Further, the recommended content items are identified by way of unambiguous identifiers that can be easily communicated and might point to more complex characterizing information items used to retrieve the content items or directly to the content items.

## Claims

1. A content provision service method to access content items provided by a content provider via a network, **characterized by**
- assigning respective identifiers to
• a single content item or a group of content items or
• to a channel of content items,
- receiving at least one assigned identifier according to a user's (21) recommendation,
- retrieving and transmitting the content items corresponding to the received identifier to a consumer (24), wherein, if the received identifier corresponds to a content item or a group of content items, the content item or the group of content items is retrieved from the content provider, and wherein, if the received identifier corresponds to a channel of content items, a user profile (19) of the user is copied to form a consumer user profile (20) and/or the consumer user profile (20) is adapted based on the user profile (19), and a sequence of content items is retrieved based on the consumer user profile (20).

2. The method according to claim 1, **characterized in that**
- retrieving the content items comprises identifying the content items to a content database (17).

3. The method according to any of the preceding claims, **characterized by**
- refining the consumer user profile (20) according to a consumer's wish.

4. The method according to claim 1, **characterized by** allowing the consumer to modify his own user profile (20) after the copying of the user profile (19).

5. The method according to any of the preceding claims, wherein
- a user's recommendation is received via a content recommendation client or device provided to the user, and
- content is received via a content access client or device provided to the consumer.

6. A content provision service device (13), comprising:
- a content access interface (16) for selecting and/or accessing, by a user (21) and a consumer (24), content items provided by a content provider via a network,
**characterized by**
- a user recommendation unit (15) for recommending content items by the user to a consumer
- a consumer recommendation retrieval unit (14) configured to receive, according to the user's recommendation, at least one of respective identifiers assigned to
• a content item or a group of content items, or
• to a channel of content items,
to retrieve and to transmit the recommended content items corresponding to the received identifier to the consumer (24), wherein, if the received identifier corresponds to a content item or a group of content items, the content item or the group of content items is retrieved from the content provider, and wherein, if the received identifier corresponds to a channel of content items, the user profile (19) of the user is copied to form a consumer user profile (20) and/or the consumer user profile (20) is adapted based on the user profile (19), and a sequence of content items is retrieved based on the consumer user profile (20).

7. The content provision service device (13) according to claim 6, **characterized in that** said user recommendation unit (15) comprises
- an assignment unit (15a) to assign respective identifiers to the content item or the group of content items or to the channel of content items, and
- a transmission unit (15b) to transmit the assigned identifier to said user.

8. The content provision service device (13) according to claim 6 or 7,
**characterized in that**
said consumer recommendation retrieval unit (14) comprises
- an identifier reception unit (14a) to receive a selected identifier from a consumer, and
- an identifier interpreter (14b) to retrieve, if the selected identifier corresponds to a content item or a group of content items, the content item or the group of content items from the content provider, and to adapt, if the selected identifier corresponds to a channel of content items, the consumer user profile (20) by copying the user profile (19) to form a consumer user profile (20) and/or by adapting the consumer user profile (20) based on the user profile (19).

9. The content provision service device (13) according to claim 6, **characterized by**
- a user profile copying unit (18) to generate a user profile (20) of the consumer by copying a stored user profile (19) of the user.

10. A computer program product, comprising computer program means adapted to perform all the method steps as defined in anyone of the claims 1 to 5, when being executed on a computer or a digital signal processor.

11. Computer readable storage means, storing thereon a computer program product according to claim 10.

## Patentansprüche

1. Inhaltsbereitstellungsdienstverfahren zum Zugreifen auf Inhaltselemente, die durch einen Inhaltsprovider über ein Netzwerk bereitgestellt werden, **gekennzeichnet durch**
- Zuweisen von jeweiligen Kennungen zu:
• einem einzelnen Inhaltselement oder einer Gruppe von Inhaltselementen oder
• einem Kanal von Inhaltselementen,
- Empfangen mindestens einer zugewiesenen Kennung gemäß der Empfehlung eines Benutzers (21),
- Abrufen und Übertragen der Inhaltselemente entsprechend der empfangenen Kennung an einen Verbraucher (24), wobei, falls die empfangene Kennung einem Inhaltselement oder einer Gruppe von Inhaltselementen entspricht, das Inhaltselement oder die Gruppe von Inhaltselementen von dem Inhaltsprovider abgerufen wird, und wobei, falls die empfangene Kennung einem Kanal von Inhaltselementen entspricht, ein Benutzerprofil (19) des Benutzers kopiert wird zum Ausbilden eines Verbraucherbenutzerprofils (20) und/oder das Verbraucherbenutzerprofil (20) auf der Basis des Benutzerprofils (19) angepasst wird und eine Sequenz von Inhaltselementen auf der Basis des Verbraucherbenutzerprofils (20) abgerufen wird.

2. Verfahren nach Anspruch 1, **dadurch gekennzeichnet, dass** das
- Abrufen der Inhaltselemente das Identifizieren der Inhaltselemente gegenüber einer Inhaltsdatenbank (17) umfasst.

3. Verfahren nach einem der vorhergehenden Ansprüche, **gekennzeichnet durch** das
- Verfeinern des Verbraucherbenutzerprofils (20) gemäß einem Verbraucherwunsch.

4. Verfahren nach Anspruch 1, **dadurch gekennzeichnet, dass** dem Verbraucher gestattet wird, sein eigenes Benutzerprofil (20) nach dem Kopieren des Benutzerprofils (19) zu modifizieren.

5. Verfahren nach einem der vorhergehenden Ansprüche, wobei
- eine Benutzerempfehlung über einen Inhaltsempfehlungsclient oder eine Inhaltsempfehlungseinrichtung, die dem Benutzer bereitgestellt sind, empfangen wird und
- Inhalt über einen Inhaltszugangsclient oder eine Inhaltszugangseinrichtung, die dem Benutzer bereitgestellt sind, empfangen wird.

6. Inhaltsbereitstellungsdiensteinrichtung (13), die Folgendes umfasst:
- eine Inhaltszugriffsschnittstelle (16) zum Wählen von und/oder Zugreifen auf durch einen Inhaltsprovider bereitgestellte Inhaltselemente über ein Netzwerk durch einen Benutzer (21) und einen Verbraucher (24),
**gekennzeichnet durch**
- eine Benutzerempfehlungseinheit (15) zum Empfehlen von Inhaltselementen **durch** den Benutzer an einen Verbraucher,
- eine Verbraucherempfehlungsabrufeinheit (14), die konfiguriert ist zum Empfangen, gemäß der Benutzerempfehlung, von mindestens eine von jeweiligen Kennungen, die zugewiesen sind zu
• einem Inhaltselement oder einer Gruppe von Inhaltselementen oder
• einem Kanal von Inhaltselementen,
- Abrufen und Übertragen der empfohlenen Inhaltselemente entsprechend der empfangenen Kennung an den Verbraucher (24), wobei, falls die empfangene Kennung einem Inhaltselement oder einer Gruppe von Inhaltselementen entspricht, das Inhaltselement oder die Gruppe von Inhaltselementen von dem Inhaltsprovider abgerufen wird, und wobei, falls die empfangene Kennung einem Kanal von Inhaltselementen entspricht, ein Benutzerprofil (19) des Benutzers kopiert wird zum Ausbilden eines Verbraucherbenutzerprofils (20) und/oder das Verbraucherbenutzerprofil (20) auf der Basis des Benutzerprofils (19) angepasst wird und eine Sequenz von Inhaltselementen auf der Basis des Verbraucherbenutzerprofils (20) abgerufen wird.

7. Inhaltsbereitstellungsdiensteinrichtung (13) nach Anspruch 6, **dadurch gekennzeichnet, dass** die Benutzerempfehlungseinheit (15) Folgendes umfasst:
- eine Zuweisungseinheit (15a) zum Zuweisen jeweiliger Kennungen zu dem Inhaltselement oder der Gruppe von Inhaltselementen oder dem Kanal von Inhaltselementen und
- eine Übertragungseinheit (15b) zum Übertragen der zugewiesenen Kennung an den Benutzer.

8. Inhaltsbereitstellungsdiensteinrichtung (13) nach Anspruch 6 oder 7, **dadurch gekennzeichnet, dass** die Verbraucherempfehlungsabrufeinheit (14) Folgendes umfasst:
- eine Kennungsempfangseinheit (14a) zum Empfangen einer ausgewählten Kennung von einem Verbraucher und
- einem Kennungsinterpretierer (14b) zum Abrufen, falls die ausgewählte Kennung einem Inhaltselement oder einer Gruppe von Inhaltselementen entspricht, des Inhaltselements oder der Gruppe von Inhaltselementen von dem Inhaltsprovider, oder zum Anpassen, falls die ausgewählte Kennung einen Kanal von Inhaltselementen entspricht, des Verbraucherbenutzerprofils (20) durch Kopieren des Benutzerprofils (19) zum Ausbilden eines Verbraucherbenutzerprofils (20) und/oder durch Anpassen des Verbraucherbenutzerprofils (20) auf der Basis des Benutzerprofils (19).

9. Inhaltsbereitstellungsdiensteinrichtung (13) nach Anspruch 6, **gekennzeichnet durch**
- eine Benutzerprofilkopiereinheit (18) zum Generieren eines Benutzerprofils (20) des Verbrauchers durch Kopieren eines gespeicherten Benutzerprofils (19) des Benutzers.

10. Computerprogrammprodukt, das Computerprogrammmittel umfasst, die ausgelegt sind zum Durchführen aller Verfahrensschritte, wie in einem der Ansprüche 1 bis 5 definiert ist, bei Ausführung auf einem Computer oder einem digitalen Signalprozessor.

11. Computerlesbares Speichermittel, das darauf ein Computerprogrammprodukt nach Anspruch 10 speichert.

## Revendications

1. Procédé de service de provision de contenu pour accéder à des éléments de contenu délivrés par un fournisseur de contenu par l'intermédiaire d'un réseau, **caractérisé par** les étapes suivantes :
affecter des identifiants respectifs à :
un élément de contenu unique ou à un groupe d'éléments de contenu, ou
à un canal d'éléments de contenu,
recevoir au moins un identifiant affecté suivant la recommandation d'un utilisateur (21),
récupérer et transmettre les éléments de contenu correspondant à l'identifiant reçu à un consommateur (24), où, si l'identifiant reçu correspond à un élément de contenu ou à un groupe d'éléments de contenu, l'élément de contenu ou le groupe d'éléments de contenu est récupéré auprès du fournisseur de contenu, et où, si l'identifiant reçu correspond à un canal d'éléments de contenu, un profil d'utilisateur (19) de l'utilisateur est copié pour former un profil d'utilisateur consommateur (20) et/ou le profil d'utilisateur consommateur (20) est adapté sur la base du profil d'utilisateur (19), et une séquence d'éléments de contenu est récupérée sur la base du profil d'utilisateur consommateur (20).

2. Procédé selon la revendication 1, **caractérisé en ce que** :
la récupération des éléments de contenu comprend d'identifier les éléments de contenu dans une base de données de contenus (17).

3. Procédé selon l'une quelconque des revendications précédentes, **caractérisé par** l'étape suivante :
affiner le profil d'utilisateur consommateur (20) suivant le souhait du consommateur.

4. Procédé selon la revendication 1, **caractérisé par** l'étape suivante :
permettre au consommateur de modifier son propre profil d'utilisateur (20) après la copie du profil d'utilisateur (19).

5. Procédé selon l'une quelconque des revendications précédentes, dans lequel :
une recommandation d'utilisateur est reçue par l'intermédiaire d'un client de recommandation de contenu ou d'un dispositif fourni à l'utilisateur, et
le contenu est reçu par l'intermédiaire d'un client d'accès au contenu ou d'un dispositif fourni au consommateur.

6. Dispositif de service de provision de contenu (13) comprenant :
une interface d'accès au contenu (16) pour sélectionner et/ou accéder, par un utilisateur (21) et un consommateur (24), à des éléments de contenu délivrés par un fournisseur de contenu par l'intermédiaire d'un réseau, **caractérisé par** :
une unité de recommandation d'utilisateur (15) pour recommander des éléments de contenu par l'utilisateur à un consommateur,
une unité de récupération de recommandation de consommateur (14) configurée pour récupérer, suivant la recommandation de l'utilisateur, au moins un des identifiants respectifs affectés à :
un élément de contenu ou à un groupe d'éléments de contenu, ou
à un canal d'éléments de contenu,
pour récupérer et transmettre les éléments de contenu recommandés correspondant à l'identifiant reçu au consommateur (24), où, si l'identifiant reçu correspond à un élément de contenu ou à un groupe d'éléments de contenu, l'élément de contenu ou le groupe d'éléments de contenu est récupéré auprès du fournisseur de contenu, et où, si l'identifiant reçu correspond à un canal d'éléments de contenu, le profil d'utilisateur (19) de l'utilisateur est copié pour former un profil d'utilisateur consommateur (20) et/ou le profil d'utilisateur consommateur (20) est adapté sur la base du profil d'utilisateur (19), et une séquence d'éléments de contenu est récupérée sur la base du profil d'utilisateur consommateur (20).

7. Dispositif de service de provision de contenu (13) selon la revendication 6, **caractérisé en ce que** ladite unité de recommandation d'utilisateur (15) comprend :
une unité d'affectation (15a) pour affecter des identifiants respectifs à l'élément de contenu ou au groupe d'éléments de contenu ou au canal d'éléments de contenu, et
une unité de transmission (15b) pour transmettre l'identifiant affecté audit utilisateur.

8. Dispositif de service de provision de contenu (13) selon la revendication 6 ou la revendication 7, **caractérisé en ce que** :
ladite unité de récupération de recommandation de consommateur (14a) comprend :
une unité de réception d'identifiant (14a) pour recevoir un identifiant sélectionné d'un consommateur, et
un interpréteur d'identifiant (14b) pour récupérer, si l'identificant sélectionné correspond à un élément de contenu ou à un groupe d'éléments de contenu, l'élément de contenu ou le groupe d'éléments de contenu auprès du fournisseur de contenu et pour adapter, si l'identifiant sélectionné correspond à un canal d'éléments de contenu, le profil d'utilisateur consommateur (20) en copiant le profil d'utilisateur (19) pour former un profil d'utilisateur consommateur (20) et/ou en adaptant le profil d'utilisateur consommateur (20) sur la base du profil d'utilisateur (19).

9. Dispositif de service de provision de contenu (13) selon la revendication 6, **caractérisé par** :
une unité de copie de profil d'utilisateur (18) pour générer un profil d'utilisateur (20) du consommateur en copiant un profil d'utilisateur stocké (19) de l'utilisateur.

10. Produit programme informatique comprenant un moyen de programme informatique conçu pour exécuter toutes les étapes de procédé telles que définies dans l'une quelconque des revendications 1 à 5, lorsqu'il est exécuté sur un ordinateur ou un processeur de signal numérique.

11. Moyen de stockage lisible par ordinateur sur lequel est stocké un produit programme informatique selon la revendication 10.
